# EUROPÄISCHE PATENTSCHRIFT

(11) **EP 0 900 952 B1**
(45) Veröffentlichungstag und Bekanntmachung des Hinweises auf die Patenterteilung: **19.06.2002**
(21) Anmeldenummer: 98115864.5
(22) Anmeldetag: 22.08.1998
(51) Int. Cl.: F16H 7/02

(54) **Riementrieb**
Belt drive
Transmission à courroie

(30) Priorität: 11.03.1998 DE 19810596; 08.09.1997 DE 29723242 U
(43) Veröffentlichungstag der Anmeldung: 10.03.1999
(73) Patentinhaber: BRECO Antriebstechnik Breher GmbH & Co., 32457 Porta Westfalica (DE)
(72) Erfinder: Kölling, Rudi, 32602 Vlotho (DE)
(74) Vertreter: Schmidt, Frank-Michael, Dr.-Ing.

(56) Entgegenhaltungen:
- DE-A- 2 910 871
- FR-A- 2 686 959
- US-A- 2 718 790
- R.G. MAPLES: "Precision timing belt" IBM TECHNICAL DISCLOSURE BULLETIN, Bd. 6, Nr. 6, November 1963 (1963-11), XP002154688

## Beschreibung

Die Erfindung betrifft einen Riementrieb mit einem Zahnriemen und einer Zahnscheibe, die eine von ineinandergreifenden Zahnrippen und Zahnnuten gebildete Verzahnung aufweisen, wobei die Verzahnung mindestens auf einem Abschnitt der Erstreckung der Zahnrippen und der Zahnnuten bogenförmig über den Zahnriemen und die Zahnscheibe verläuft.

Das Betriebsverhalten derartiger Riementriebe wird u.a. von zwei wesentlichen Parametern bestimmt, nämlich zum einen von der Seitenführung des Zahnriemens und zum anderen von der Entwicklung der Laufgeräusche.

Um ein seitliches Ablaufen des Zahnriemens von der Zahnscheibe zu verhindern, hat man die Zahnscheibe mit seitlichen Stegen versehen. Dies verteuert die Herstellung der Zahnscheibe. Hinzu kommt, daß die seitlichen Anlaufflächen den Verschleiß und die Laufgeräusche erhöhen. Auch hat man bereits die Verzahnung in mehrere Reihen unterteilt und diese derart gegeneinander versetzt, daß die Seitenflächen der Zahnrippen der einen Reihe vor den Zahnnuten der seitlich benachbarten Reihe zu liegen kamen und somit seitliche Anlaufflächen bildeten. Das Problem des Verschleißes und der Laufgeräusche blieb also bestehen. Auch war die Herstellung der Zahnscheibe nach wie vor aufwendig, da mehrere Teilscheiben gefertigt und versetzt zueinander zusammengefügt werden mußten.

Zur Verminderung der Laufgeräusche hat man schalldämmendes Material zwischen den ineinandergreifenden Zahnrippen und Zahnnuten angeordnet, wodurch sich bei erhöhten Herstellungskosten die Verschleißfestigkeit des Riementriebs verminderte.

Die bekannte Vorrichtung der eingangs genannten Art (IBM Technical disclosure bulletin; R.G. Maples: "Precision timing belt", Bd. 6, Nr. 6, November 1963) begegnet dem Problem des seitlichen Ablaufens des Zahnriemens durch eine ballige Gestaltung der Zahnscheibe und eine entsprechend konkave Gestaltung des Zahnriemens. Ein gewisses seitliches Pendeln des Zahnriemens kann dennoch nicht verhindert werden. Maßnahmen zur Geräuschdämpfung sind nicht vorgesehen.

Der Erfindung liegt die Aufgabe zugrunde, in herstellungstechnisch einfacher Weise das Betriebsverhalten des Riementriebs zu verbessern.

Zur Lösung dieser Aufgabe ist der eingangs genannte Riementrieb erfindungsgemäß dadurch gekennzeichnet, daß die Bögen, bezogen auf die Draufsicht auf die profilierte Seite des Zahnriemens, in der Ebene des Zahnriemens liegen.

Die bogenförmige Gestaltung der Zahnrippen und der Zahnnuten ergibt eine automatische Selbstführung des Zahnriemens auf der Zahnscheibe, und zwar ohne das Erfordernis seitlicher Anlaufflächen. Eine entsprechende Vereinfachung der Herstellung ist die Folge. Auch besteht nicht die Gefahr, daß der Zahnriemen schon bei geringen seitlichen Auslenkungen an den Zahnrippen der Zahnscheibe hochläuft.

Vor allen Dingen werden die Laufgeräusche des Riementriebs extrem vermindert. Die Verzahnungen laufen nicht mehr linienförmig ineinander, sondern punktförmig. Der bei herkömmlichen Zahnriemen unvermeidbare Polygoneffekt wird praktisch vollständig eliminiert. Der Polygoneffekt ergibt sich dadurch, daß sich der Auflaufpunkt des Zahnriemens auf die Zahnscheibe aufgrund der konventionellen Verzahnung, die geradlinig senkrecht zur Laufrichtung ausgerichtet ist, in radialer Richtung periodisch ändert. Dies führt dazu, daß der Zahnriemen mit einer gewissen radialen Geschwindigkeitskomponente auf die Zahnscheibe aufschlägt. Untersuchungen. haben gezeigt, daß dieses durch den Polygoneffekt bewirkte Aufschlagen die Hauptursache für die Entstehung der Laufgeräusche darstellt. Da die erfindungsgemäße bogenförmige Verzahnung diesen Effekt eliminiert, ergibt sich eine extreme Geräuscharmut.

Der Zahnriemen läuft also äußerst schwingungsarm, so daß auf verzahnte Spannrollen, wie sie sonst zur Schwingungsdämpfung erforderlich waren, verzichtet werden kann.

Ein weiterer Vorteil des erfindungsgemäßen Riementriebs ergibt sich dann, wenn der Zahnriemen als Förderband tangential über horizontale, zylindrische Stützrollen läuft. Bei einer konventionellen Verzahnung bewirkt jede Zahnnut ein Einsinken und jede Zahnrippe ein Aufsteigen des Zahnriemens. Der Zahnriemen "rattert" also über die Stützrollen. Derselbe Effekt, wenn auch nicht ganz so stark, ergibt sich, wenn ein Zahnriemen mit konventioneller Verzahnung um eine zylindrische Umlenkrolle herumgeführt wird. Bei der erfindungsgemäßen bogenförmigen Verzahnung tritt dieses "Rattern" nicht auf.

Der Riementrieb nach der Erfindung ermöglicht gegenüber konventionellen Verzahnungen eine um mindestens 5% höhere Zahnbelastung bei sonst gleichen Voraussetzungen, und zwar aufgrund der Tatsache, daß die Länge der Zahnrippen größer ist als die Breite des Zahnriemens. Die Eingrifflänge ist also erhöht, so daß die erhöhte Zahnbelastung die zulässige Flankenpressung nicht übersteigt.

Die Erfindung läßt grundsätzlich jede beliebige Bogenform zu. Aus herstellungstechnischen Gründen ist es allerdings besonders vorteilhaft, die bogenförmigen Abschnitte der Zahnrippen und der Zahnnuten kreisbogenförmig auszubilden.

Auch stellt die Erfindung keine Begrenzung dar, was die Zahnteilung anbelangt. In diesem Zusammenhang ist es allerdings besonders vorteilhaft, daß der Verlauf der Verzahnung derart ausgebildet ist, daß eine in Laufrichtung vorne liegende Zahnrippe ihre Eingriffsbewegung erst beendet, wenn die nächstfolgende Zahnrippe mit ihrer Eingriffsbewegung bereits begonnen hat. Dies fördert die Laufruhe des Riementriebs.

Unter Umständen kann es zur Erzielung einer wesentlichen Überdeckung vorteilhaft sein, die bogenförmige Verzahnung elliptisch auszubilden, wobei die lange Achse der Ellipse in Laufrichtung des Zahnriemens bzw. der Zahnscheibe weist.

Ferner besteht ein bevorzugtes Merkmal darin, daß sich an die bogenförmigen Abschnitte der Zahnrippen und der Zahnnuten beidseitig je ein geradliniger Abschnitt anschließt. Es ergibt sich also eine Verzahnung, deren geradlinige Schenkel durch einen Bogen miteinander verbunden sind. Zwischen den einzelnen Zahnrippenabschnitten können durchaus Lücken vorgesehen sein.

In wesentlicher Weiterbildung der Erfindung wird vorgeschlagen, die Verzahnung in mindestens zwei in Laufrichtung verlaufende Reihen zu unterteilen. Jede Reihe ist mit Zahnrippen und Zahnnuten besetzt, wobei unterschiedlichste Formgebungen möglich sind. So können die Zahnrippen und die Zahnnuten benachbarter Reihen direkt ineinander übergehen. Auch können zwischen den Zahnrippen benachbarte Reihen Lücken vorgesehen sein, die das Entweichen der Luft während des Eingriffvorganges erleichtern. Ganz besonders vorteilhaft ist es, die Zahnrippen und die Zahnnuten in einer der Reihen der Verzahnung in Laufrichtung gegen die in der benachbarten Reihe zu versetzen. Auch dies erleichtert das Entweichen der Luft und trägt ferner dazu bei, die Laufruhe des Riementriebes zu steigern.

Vorzugsweise bilden die Zahnrippen und die Zahnnuten in benachbarten Reihen der Verzahnung gegeneinander versetzte Halbbögen. Dadurch ergibt sich ein besonders einfaches Muster. Ein wesentlicher Vorteil wird ferner dadurch erzielt, daß die Bogenscheitel der Verzahnung in Laufrichtung des Zahnriemens bzw. der Zahnscheibe gerichtet sind. Es wurde gefunden, daß hieraus eine besonders zuverlässige Seitenführung des Zahnriemens resultiert. Tatsächlich ergibt sich eine selbstzentrierende Wirkung, die den Zahnriemen automatisch in die korrekte Eingriffsposition zurückleitet, sofern ein äußerer Eingriff die Zentrierung vorübergehend gestört haben sollte.

In diesem Zusammenhang wird in Weiterbildung der Erfindung vorgeschlagen, daß die Zahnrippen und die Zahnnuten in benachbarten Reihen der Verzahnung gegenläufig zueinander gerichtete Bögen bilden. Der Effekt der Selbstzentrierung ergibt sich also auch bei reversierender Laufrichtung des Riementriebs.

In wesentlicher Weiterbildung der Erfindung wird vorgeschlagen, daß die Zahnrippen des Zahnriemens und die Zahnnuten der Zahnscheibe je eine konstante Breite aufweisen, während sich die Zahnnuten des Zahnriemens und die Zahnrippen der Zahnscheibe zu den Enden hin verjüngen. Der hierdurch erzielte Vorteil liegt auf herstellungstechnischem Gebiet. Bei der Fertigung der Zahnscheibe wird mit einem profilierten Fräser gearbeitet, der bogenförmig geführt wird und dabei eine Zahnnut fräst. Für die nächste Zahnnut wird das System um eine Zahnteilung weitergeschaltet. Die Zahnrippen werden also auf ihrer konvexen Fläche von der Innenseite des Fräsers in dessen erster Position gefräst, während die konkaven Flanken der Einwirkung der Außenseite des Fräsers in dessen zweiter Position unterliegen. Die wesentliche Vereinfachung besteht darin, daß der Schwenkweg des Fräsers - bei kreisbogenförmiger Verzahnung der Schwenkradius des Fräsers - konstant bleibt. Gleiche Verhältnisse, allerdings spiegelbildlich, sind bei der Herstellung der zahnscheibenartigen Form für den Zahnriemen gegeben.

Ferner ist es vorteilhaft, daß im Boden jeder Zahnnut des Zahnriemens eine Rinne von konstanter Breite verläuft. Ihre Tiefe wird begrenzt durch die längslaufenden Drahtlitzen, die in das Material des Zahnriemens eingebettet sind. Auch hier liegt der Vorteil auf herstellungstechnischem Gebiet.

Die Form zur Erzeugung des Zahnriemens ist, wie erwähnt, als Zahnscheibe ausgebildet. Über diese Zahnscheibe werden die Drahtlitzen gespannt. Um zu vermeiden, daß die Drahtlitzen die Böden der Zahnnuten des fertigen Zahnriemens bilden, trägt jede Zahnrippe der Form eine sogenannte Wickelnase von sehr geringer Breite. Würde man die Wickelnasen zusammen mit den Zahnnuten der Form ausbilden, so würden die Wickelnasen, ebenso wie die Zahnrippen der Form, eine zu den Rändern hin abnehmende Breite erhalten. Dies verbietet sich aufgrund der ohnehin äußerst geringen Breite der Wickelnasen. Dementsprechend wird bei der Bearbeitung der Vorderflanken und der Hinterflanken der Wickelnase der Schwenkweg, ggf. der Schwenkradius des Fräsers (es handelt sich um einen gesonderten solchen) geändert, dergestalt, daß die Breite der Wickelnasen konstant bleibt. Dies ergibt dann die konstante Breite der Rinnen in den Zahnnuten des Zahnriemens. Die geometrischen Verhältnisse, nämlich die Zahnteilung, die Bogenform der Verzahnung und deren Breite, werden so gewählt, daß sich nicht nur, wie erwähnt, eine Wickelnase konstanter Breite ergibt, sondern daß auch die Zahnrippen der Form (also die Zahnnuten des Zahnriemens) an den Enden eine Mindestbreite nicht unterschreiten. Diese wird bestimmt durch die Fußbreite der Wickelnase.

In wesentlicher Weiterbildung der Erfindung wird ferner vorgeschlagen, daß die Bögen des Zahnriemens gegenüber den Bögen der Zahnscheibe unterschiedlich gekrümmt sind. Dies bietet eine optimale Möglichkeit, den Eingriffsvorgang der Verzahnung zu steuern. So kann der Beginn des Eingriffs mit geringem Spiel erfolgen, so daß praktisch keine Reibung auftritt. Das Spiel kann dann fortschreitend vermindert werden, bis sich ein spielfreier Eingriff ergibt, bei dem die Zahnrippen, wie erwähnt, punktförmig in die Zahnnuten einlaufen.

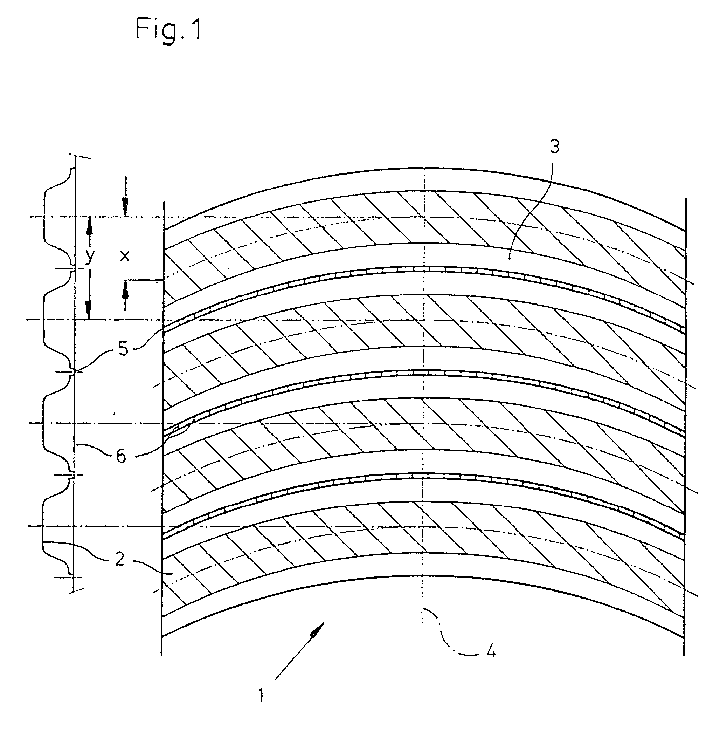

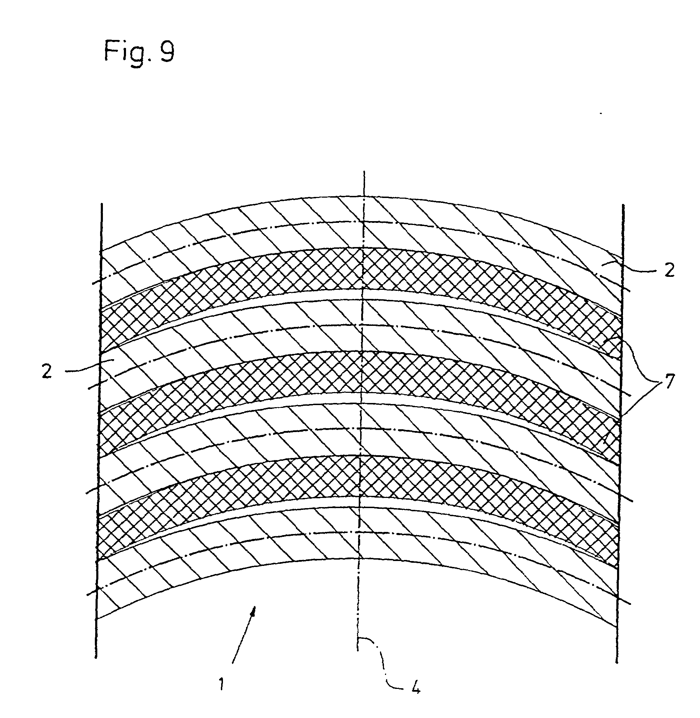

Die Erfindung wird im folgenden anhand bevorzugter Ausführungsbeispiele im Zusammenhang mit der beiliegenden Zeichnung näher erläutert. Die Zeichnung zeigt in den Fig. 1 bis 8 Draufsichten auf die profilierte Seite unterschiedlicher Zahnriemen, wobei linksseitig jeweils die Kontur des Zahnriemens angedeutet ist. Bei der Ausführungsform nach Fig. 9 sind zwischen den Zahnrippen des Zahnriemens einige Zahnrippen der Zahnscheibe angedeutet.

Nach Fig. 1 ist der Zahnriemen 1 mit Zahnrippen 2 und Zahnnuten 3 versehen. Aus Gründen der Übersichtlichkeit sind hier - wie auch in allen weiteren Figuren - die Zahnrippen 2 mit einer Schraffur versehen.

Die Zahnrippen 2 und die Zahnnuten 3 verlaufen bogenförmig über die Breite des Zahnriemens 1, und zwar symmetrisch zu dessen Längsmittellinie 4. Die Verzahnung ist im vorliegenden Fall kreisbogenförmig ausgebildet.

Die in Längsrichtung des Zahnriemens 1 gemessene Erstreckung x jedes Bogens von der Längsmittellinie 4 bis zu den Rändern des Zahnriemens, zuzüglich der Zahnrippendicke, ist größer als eine Zahnteilung y. Auf diese Weise wird sichergestellt, daß eine in Laufrichtung vorne liegende Zahnrippe ihre Eingriffsbewegung erst beendet, wenn die nächstfolgende Zahnrippe mit ihrer Eingriffsbewegung bereits begonnen hat.

Der Zahnriemen 1 ist im vorliegenden Falle für einen nicht-reversiblen Betriebs vorgesehen, und zwar für eine Laufrichtung von unten nach oben in Fig. 1. Die Scheitel der Bögen weisen also in Laufrichtung.

Der Zahnriemen 1 bildet zusammen mit einer zugehörigen Zahnscheibe einen erfindungsgemäßen Riementrieb. Die Zahnscheibe ist bzgl. ihrer Zahnrippen und Zahnnuten komplementär ausgebildet. Auf eine gesonderte Darstellung wurde daher verzichtet.

Der Riementrieb gewährleistet eine Selbstführung des Zahnriemens auf der Zahnscheibe, wobei nicht die Gefahr besteht, daß der Zahnriemen bei seitlicher Auslenkung sofort auf den Zahnrippen der Zahnscheibe hochläuft. Vielmehr bewirkt die in Laufrichtung bogenförmige Verzahnung eine automatische Re-Zentrierung eines ausgelenkten Zahnriemens. Der Riementrieb arbeitet mit höchster Laufruhe und minimaler Geräuschentwicklung, da kein Polygoneffekt auftritt. Verzahnte Spannrollen zur Schwingungsdämpfung sind nicht erforderlich. Auch können zylindrische Stützrollen ohne "Rattern" tangential überlaufen werden. Gleiches gilt für die Umschlingung zylindrischer Umlenkrollen.

Aus der Zeichnung ist ersichtlich, daß die Zahnrippen 2 von konstanter Breite sind, während sich die Zahnnuten 3 von der Mitte aus zu den Rändern hin verjüngen. Dies ist auf eine besonders einfache Art der Herstellung zurückzuführen. Das zahnscheibenartige Werkzeug zum Formen des Zahnriemens wird dadurch hergestellt, daß seine Zahnnuten, die später die Zahnrippen des Zahnriemens ausbilden, von einem Fräser gefräst werden, dessen Schwenkpunkt jeweils um eine Zahnteilung fortgeschaltet wird. Die Zahnrippen des Werkzeugs, die später die Zahnnuten des Zahnriemens bilden, werden also auf der konvexen Flanke von der Innenseite des Fräsers in dessen erster Position gefräst, während die konkaven Flanken der Einwirkung der Außenseite des Fräsers in dessen zweiter Position unterliegen. Die entscheidende Vereinfachung besteht darin, daß der Schwenkradius des Fräsers nicht geändert werden muß. Dieser Vorteil wirkt sich insbesondere auch bei der Herstellung der eigentlichen Zahnscheibe aus.

Die Zeichnung zeigt ferner, daß der Boden jeder Zahnnut 3 eine Rinne 5 von konstanter Breite aufweist, die sich bis zu Drahtlitzen 6 erstreckt, welche in das Material des Zahnriemens 1 eingebettet sind. Die Rinne 5 wird erzeugt durch die sogenannte Wickelnase auf den Zahnrippen des Werkzeugs, über die die Drahtlitzen 6 verspannt werden. Bei der Bearbeitung der Flanken der Wickelnasen wird der zugehörige Fräser ebenfalls um eine Zahnteilung fortgeschaltet, wobei sich außerdem sein Schwenkradius ändert, so daß die Wickelnasen in konstanter Breite entstehen. Da sie extrem schmal sind, wäre eine Verjüngung zu den Rändern hin nicht zu tolerieren.

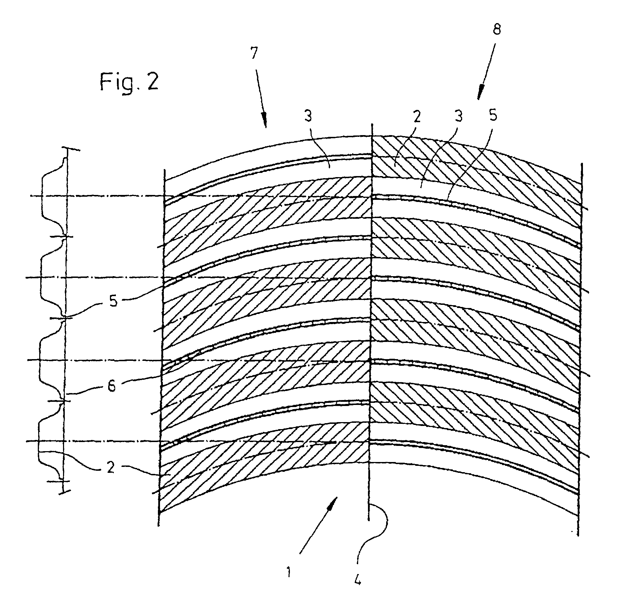

Die Ausführungsform nach Fig. 2 unterscheidet sich von der nach Fig. 1 dadurch, daß die Verzahnung in zwei in Laufrichtung verlaufende Reihen 7 und 8 unterteilt ist und daß die Zahnrippen und die Zahnnuten der einen Reihe gegen die der anderen Reihe versetzt sind. Daraus ergibt sich eine weitere Steigerung der Laufruhe des Riementriebs. Die Zahnrippen und Zahnnuten der Reihen werden von gegeneinander versetzten Halbbögen gebildet.

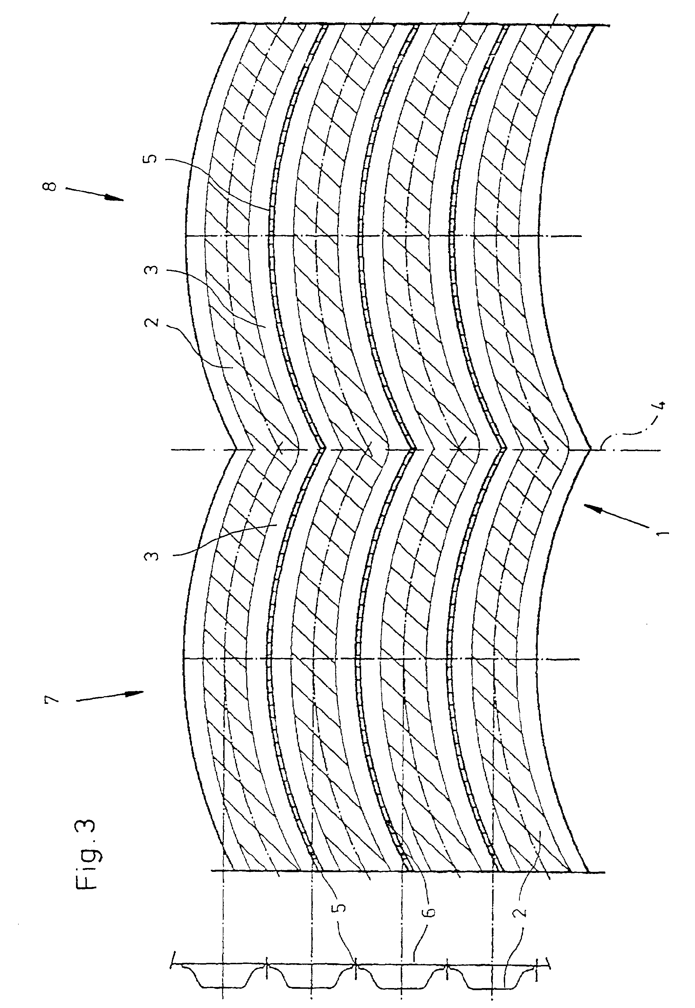

Auch nach Fig. 3 ist die Verzahnung in die beiden Reihen 7 und 8 unterteilt. Allerdings schließen hier die Zahnrippen und die Zahnnuten der beiden Reihen direkt aneinander an. Dennoch kann bei dieser Ausführungsform die Zahnscheibe aus einem Stück gefertigt werden. Beim Fräsen der Zahnnuten der Zahnscheibe durchläuft der Fräser auf deren Umfangsmittellinie einen Umkehrpunkt. Dies zeigt sich in Fig. 3 an den unteren bogenförmigen Übergängen der Zahnrippen 2 auf der Längsmittellinie 4 des Zahnriemens 1. Hier ergeben sich Spitzen, sofern die Zahnscheibe aus zwei gesonderten, miteinander verbundenen Scheiben gefertigt wird.

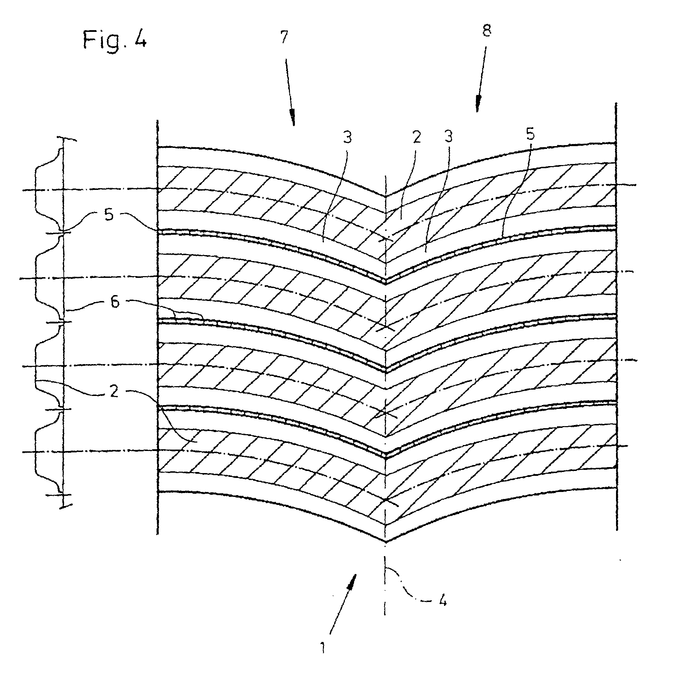

Eine entsprechende Ausführungsform ist in Fig. 4 dargestellt. Im übrigen unterscheidet sich diese Ausführungsform von der nach Fig. 3 dadurch, daß die Zahnrippen 2 und die Zahnnuten 3 in den beiden Reihen 7 und 8 jeweils aus Halbbögen bestehen.

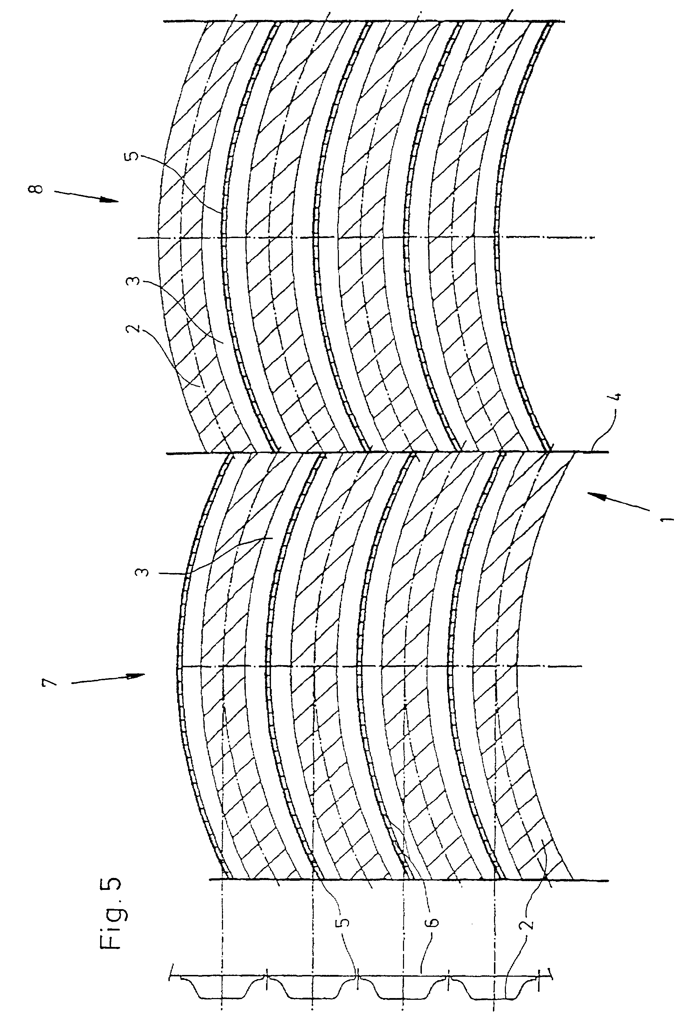

Die Ausführungsform nach Fig. 5 schließt ebenfalls an die nach Fig. 3 an. Es handelt sich um eine Variante, bei der die Zahnrippen 2 und die Zahnnuten 3 der beiden Reihen 7 und 8 gegeneinander versetzt sind.

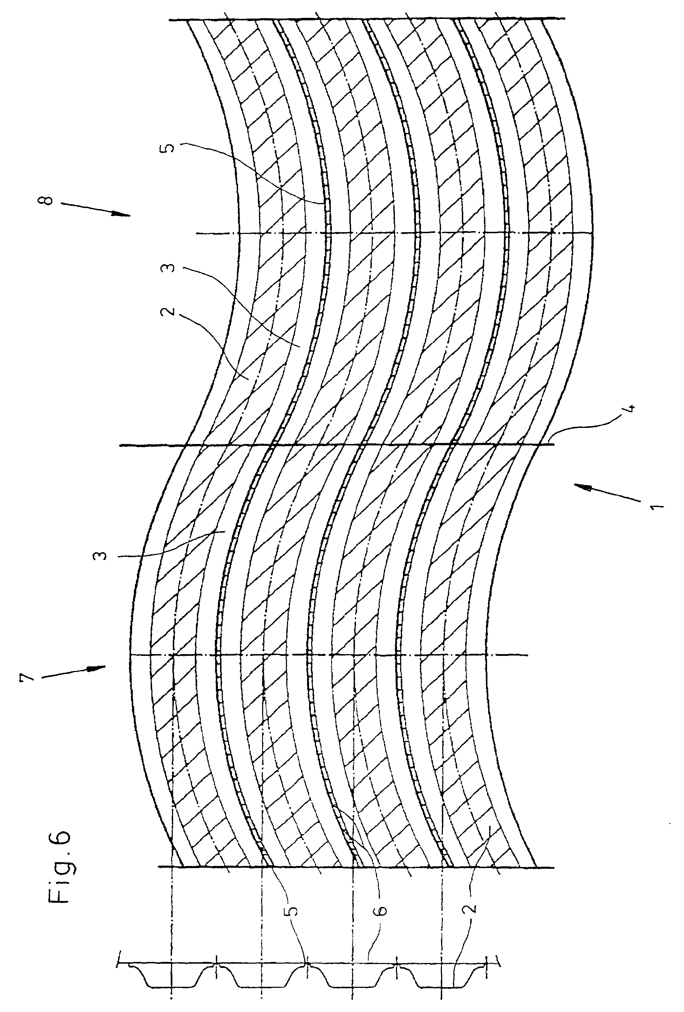

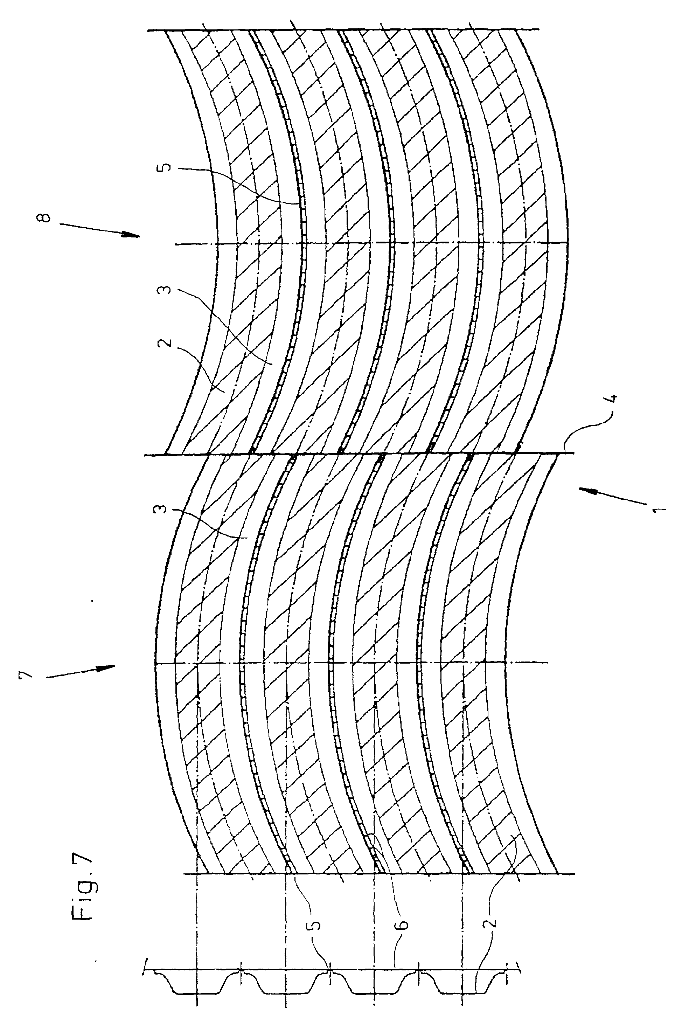

Die bisher beschriebenen Riementriebe sind bevorzugt für irreversible Laufrichtung vorgesehen, wobei die Scheitel der Bögen der Verzahnung in Laufrichtung weisen. Die Ausführungsform nach Fig. 6 hingegen ist so ausgebildet, daß der Riementrieb den Vorteil der Selbstzentrierung in beiden Laufrichtungen entwickelt. Hierzu bilden die Zahnrippen 2 und die Zahnnuten 3 der beiden Reihen 7 und 8 gegenläufig zueinander gerichtete Bögen. Gleiches gilt für die Ausführungsform nach Fig. 7, wobei hier die Zahnrippen 2 und die Zahnnuten 3 der beiden Reihen 7 und 8 in Laufrichtung gegeneinander versetzt sind.

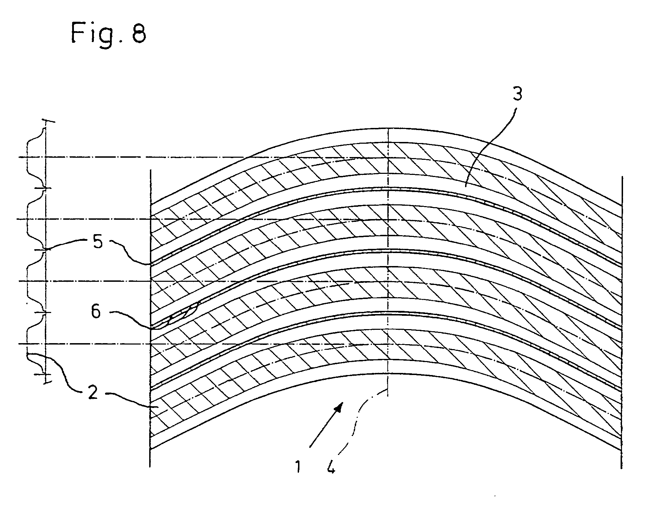

Die Ausführungsform nach Fig. 8 entspricht im wesentlichen der nach Fig. 1, allerdings mit der Maßgabe, daß nur der mittlere Abschnitt der Verzahnung, nämlich der Bereich beidseitig der Längsmittellinie 4 bogenförmig ausgebildet ist. Seitlich schließen sich an die Bögen geradlinige Abschnitte an.

Fig. 9 schließlich zeigt zusätzlich zu den Zahnrippen 2 des Zahnriemens weitere Zahnrippen 7, die zu der im übrigen nicht dargestellten Zahnscheibe gehören. Ersichtlich stimmen die Krümmungen der Zahnrippen 7 mit denen der Zahnrippen 2 nicht überein. Auf diese Weise läßt sich das Einlaufverhalten des Riementriebes beeinflussen, und zwar mit sehr einfachen Mitteln. Das Einlaufen kann mit Zahnspiel beginnen, wobei sich dieses zunehmend vermindert und schließlich in einen beidseitigen punktförmigen Einlauf übergeht.

Im übrigen sind im Rahmen der Erfindung durchaus Abwandlungsmöglichkeiten gegeben. So können anstelle kreisbogenförmiger Verzahnungen elliptische Verzahnungen gewählt werden, wobei die lange Achse der Ellipse mit der Längsmittellinie 4 zusammenfällt. Diese Konstruktion wird man wählen, wenn die Überdeckung eine Zahnteilung wesentlich übersteigen soll. Auch kann abweichend von den dargestellten Zahnteilungen jede beliebige Zahnteilung gewählt werden. Schließlich ist die Erfindung anwendbar auf Riementriebe beliebiger Bauart, wobei hervorzuheben ist, daß in jedem Falle höhere Leistungen und höhere Drehzahlen erzielbar sind, als es mit konventionellen Riementrieben möglich ist, deren Verzahnung geradlinig quer zur Laufrichtung verläuft. Vor allen Dingen eignet sich die Erfindung für Riementriebe mit Zahnriemen aus thermoplastischen Polymeren.

## Patentansprüche

1. Riementrieb mit einem Zahnriemen (1) und einer Zahnscheibe, die eine von ineinander greifenden Zahnrippen (2) und Zahnnuten (3) gebildete Verzahnung aufweisen, wobei die Verzahnung mindestens auf einem Abschnitt der Erstreckung der Zahnrippen (2) und der Zahnnuten (3) bogenförmig über den Zahnriemen (1) und die Zahnscheibe verläuft,
**dadurch gekennzeichnet,**
**daß** die Bögen, bezogen auf die Draufsicht auf die profilierte Seite des Zahnriemens (1), in der Ebene des Zahnriemens (1) liegen.

2. Riementrieb nach Anspruch 1, **dadurch gekennzeichnet, daß** die bogenförmigen Abschnitte der Zahnrippen (2) und der Zahnnuten (3) kreisbogenförmig ausgebildet sind.

3. Riementrieb nach Anspruch 1 oder 2, **dadurch gekennzeichnet, daß** der Verlauf der Verzahnung derart ausgebildet ist, daß eine in Laufrichtung vorne liegende Zahnrippe (2) ihre Eingriffsbewegung erst beendet, wenn die nächstfolgende Zahnrippe (2) mit ihrer Eingriffsbewegung bereits begonnen hat.

4. Riementrieb nach einem der Ansprüche 1 bis 3, **dadurch gekennzeichnet, daß** sich an die bogenförmigen Abschnitte der Zahnrippen (2) und der Zahnnuten (3) beidseitig je ein geradliniger Abschnitt anschließt.

5. Riementrieb nach einem der Ansprüche 1 bis 4, **dadurch gekennzeichnet, daß** die Verzahnung in mindestens zwei in Laufrichtung verlaufende Reihen (7,8) unterteilt ist.

6. Riementrieb nach Anspruch 5, **dadurch gekennzeichnet, daß** die Zahnrippen (2) und die Zahnnuten (3) in einer der Reihen (7,8) der Verzahnung in Laufrichtung gegen die in der benachbarten Reihe versetzt sind.

7. Riementrieb nach Anspruch 5 oder 6, **dadurch gekennzeichnet, daß** die Zahnrippen (2) und die Zahnnuten (3) in benachbarten Reihen (7,8) der Verzahnung gegeneinander versetzte Halbbögen bilden.

8. Riementrieb nach einem der Ansprüche 1 bis 7, **dadurch gekennzeichnet, daß** die Bogenscheitel der Verzahnung in Laufrichtung des Zahnriemens (1) bzw. der Zahnscheibe gerichtet sind.

9. Riementrieb nach Anspruch 5 oder 6, **dadurch gekennzeichnet, daß** die Zahnrippen (2) und die Zahnnuten (3) in benachbarten Reihen (7,8) der Verzahnung gegenläufig zueinander gerichtete Bögen bilden.

10. Riementrieb nach einem der Ansprüche 1 bis 9, **dadurch gekennzeichnet, daß** die Zahnrippen (2) des Zahnriemens (1) und die Zahnnuten der Zahnscheibe je eine konstante Breite aufweisen, während sich die Zahnnuten (3) des Zahnriemens (1) und die Zahnrippen der Zahnscheibe zu den Enden hin verjüngen.

11. Riementrieb nach Anspruch 10, **dadurch gekennzeichnet, daß** im Boden jeder Zahnnut (3) des Zahnriemens (1) eine Rinne (5) von konstanter Breite verläuft.

12. Riementrieb nach einem der Ansprüche 1 bis 11, **dadurch gekennzeichnet, daß** die Bögen des Zahnriemens (1) gegenüber den Bögen der Zahnscheibe unterschiedlich gekrümmt sind.

## Claims

1. Belt transmission including a toothed belt (1) and a toothed wheel, which have a gear-tooth system constituted by meshing tooth ribs (2) and tooth grooves (3), the gear-tooth system extending in an arcuate shape over the toothed belt (1) and toothed wheel over at least a section of the length of the tooth ribs (2) and the tooth grooves (3), **characterised in that** the arcs lie in the plane of the toothed belt (1), with reference to the plan view of the profiled side of the tooth belt (1).

2. Belt transmission as claimed in Claim 1, **characterised in that** the arcuate sections of the tooth ribs (2) and the tooth grooves (3) are of circular arcuate shape.

3. Belt transmission as claimed in Claim 1 or 2, **characterised in that** the shape of the gear-tooth system is such that a tooth rib (2) situated forwardly in the direction of movement only terminates its meshing movement when the subsequent tooth rib (2) has already commenced its meshing movement.

4. Belt transmission as claimed in one of Claims 1 to 3, **characterised in that** connected to both sides of the arcuate sections of the tooth ribs (2) and the tooth grooves (3) there is a respective straight section.

5. Belt transmission as claimed in one of Claims 1 to 4, **characterised in that** the gear-tooth system is divided into at least two rows (7, 8) extending in the direction of movement.

6. Belt transmission as claimed in Claim 5, **characterised in that** the tooth ribs (2) and the tooth grooves (3) in one of the rows (7, 8) of the gear-tooth system are offset in the direction of movement with respect to those in the adjacent row.

7. Belt transmission as claimed in Claim 5 or 6, **characterised in that** the tooth ribs (2) and the tooth grooves (3) in adjacent rows (7, 8) of the gear-tooth system define semi-arcs offset from one another.

8. Belt transmission as claimed in one of Claims 1 to 7, **characterised in that** the crests of the arcs of the gear-tooth system are directed in the direction of movement of the toothed belt (1) or the toothed wheel.

9. Belt transmission as claimed in Claim 5 or 6, **characterised in that** the tooth ribs (2) and the tooth grooves (3) in adjacent rows (7, 8) of the gear-tooth system define arcs directed in opposite directions to one another.

10. Belt transmission as claimed in one of Claims 1 to 9, **characterised in that** the tooth ribs (2) on the toothed belt (1) and the tooth grooves on the toothed wheel have a constant breadth whilst the tooth grooves (3) on the toothed belt (1) and the tooth ribs on the toothed wheel taper towards their ends.

11. Belt transmission as claimed in Claim 10, **characterised in that** extending in the base of each tooth groove (3) on the toothed belt (1) there is a channel (5) of constant breadth.

12. Belt transmission as claimed in one of Claims 1 to 11, **characterised in that** the arcs on the toothed belt (1) have a different curvature to the arcs on the toothed wheel.

## Revendications

1. Transmission à courroie comprenant une courroie dentée (1) et une poulie dentée qui présentent une denture formée par des nervures de dents (2) et des rainures de dents (3) qui s'emboîtent, la denture, au moins sur une partie de l'étendue des nervures de dents (2) et des rainures de dents (3), s'étendant en forme d'arc sur la courroie dentée (1) et la poulie dentée,
**caractérisée par le fait**
**que** les arcs, relativement à la vue de dessus du côté profilé de la courroie dentée (1), sont dans le plan de cette dernière.

2. Transmission à courroie selon la revendication 1, **caractérisée par le fait que** les parties arquées des nervures de dents (2) et des rainures de dents (3) sont en forme d'arc de cercle.

3. Transmission à courroie selon l'une des revendications 1 et 2, **caractérisée par le fait que** l'allure de la denture est telle qu'une nervure de dent (2) située en avant dans la direction de marche termine son mouvement d'engrènement seulement lorsque la nervure de dent (2) suivante a déjà commencé son mouvement d'engrènement.

4. Transmission à courroie selon l'une des revendications 1 à 3, **caractérisée par le fait que** les parties arquées des nervures de dents (2) et des rainures de dents (3) sont suivies de chaque côté d'une partie rectiligne.

5. Transmission à courroie selon l'une des revendications 1 à 4, **caractérisée par le fait que** la denture est divisée en au moins deux rangs (7, 8) s'étendant dans la direction de marche.

6. Transmission à courroie selon la revendication 5, **caractérisée par le fait que** les nervures de dents (2) et les rainures de dents (3) d'un des rangs (7, 8) de la denture sont décalées dans la direction de marche de celles du rang voisin.

7. Transmission à courroie selon l'une des revendications 5 et 6, **caractérisée par le fait que** les nervures de dents (2) et les rainures de dents (3) de rangs voisins (7, 8) de la denture forment des demi-arcs décalés les uns des autres.

8. Transmission à courroie selon l'une des revendications 1 à 7, **caractérisée par le fait que** les sommets des arcs de la denture sont dirigés dans la direction de marche de la courroie dentée (1) ou de la poulie dentée.

9. Transmission à courroie selon l'une des revendications 5 et 6, **caractérisée par le fait que** les nervures de dents (2) et les rainures de dents (3) de rangs voisins (7, 8) de la denture forment des arcs dirigés en sens contraire.

10. Transmission à courroie selon l'une des revendications 1 à 9, **caractérisée par le fait que** tant les nervures de dents (2) de la courroie dentée (1) que les rainures de dents de la poulie dentée présentent une largeur constante, tandis que les rainures de dents (3) de la courroie dentée (1) et les nervures de dents de la poulie dentée se rétrécissent vers les extrémités.

11. Transmission à courroie selon la revendication 10, **caractérisée par le fait que** dans le fond de chaque rainure de dent (3) de la courroie dentée (1) s'étend une rigole (5) de largeur constante.

12. Transmission à courroie selon l'une des revendications 1 à 11, **caractérisée par le fait que** les arcs de la courroie dentée (1) sont courbés différemment des arcs de la poulie dentée.
